# EUROPEAN PATENT APPLICATION

(11) **EP 1 864 894 A1**
(43) Date of publication of application: **12.12.2007**
(21) Application number: 07010022.7
(22) Date of filing: 21.05.2007
(51) Int. Cl.: B62J 1/08

(54) **Bicycle seat post**

(30) Priority: 08.06.2006 IT MI20061110
(71) Applicant: CAMPAGNOLO S.r.l., 36100 Vicenza (VI) (IT)
(72) Inventor: Meggiolan, Mario, 36051 Creazzo (Vicenza) (IT)
(74) Representative: Castiglia, Paolo

(57) **Abstract**

Bicycle seat post (10) comprising a tubular element (11) adapted to support the seat (2) of a bicycle (1) and grasping means (13) of a portion (15) of frame of the seat adapted to be rotatably coupled with the tubular element to allow the positioning of the grasping means (13) in a plurality of operating positions defined about an axis X-X perpendicular to a plane of longitudinal symmetry of the frame (3) of the bicycle. The tubular element (11) comprises first holding means (31) of the grasping means (13) and the grasping means (13) comprise second holding means (36) operatively coupled with the aforementioned first holding means to prevent the movement of the grasping means along the axis X-X. Preferably, the coupling between the first and second holding means takes place through respective coupling surfaces having a matching shape.

## Description

The present invention relates to a bicycle seat post. In particular, the invention concerns an adjustable seat post for a racing bicycle.

Throughout the present description and in the subsequent claims, the expression "bicycle seat post" is used to indicate the component of the bicycle that supports the seat on the bicycle frame. In particular, "adjustable seat post" is used to indicate a seat post that allows the position of the seat to be adjusted with respect to the bicycle frame.

In the field of bicycles, above all racing bicycles, the use of adjustable seat posts is widespread. The ideal position of the seat is that which allows the most advanced leg of the cyclist to bend at 90° when the pedals are aligned horizontally and allows the cyclist's bust to assume a comfortable position when the arms rest on the handlebars.

Of course, the ideal position of the seat depends upon the physiognomy of the cyclist, in particular the length of his legs and arms. Such an ideal position can be obtained through the combination of three different adjustments: an adjustment of the height of the seat, an adjustment of the seat with respect to a vertical reference plane passing through the axis of the bottom bracket assembly of the bicycle and an adjustment of the inclination of the seat with respect to the seat post.

Most of the known seat posts comprise a seat tube adapted to be telescopically inserted, for at least part of the longitudinal extension thereof, in the appropriate tubular seat provided in the bicycle frame and a jaw having two jaw elements adapted to grasp the rectilinear portions of the rods of the frame of the seat to associate the seat with the seat tube.

The adjustment of the height of the seat is obtained by sliding the seat tube up or down in the appropriate tubular seat of the frame; in particular, the stable positioning of the seat at the desired height is obtained by locking suitable locking members provided on the tubular seat of the bicycle frame onto the seat tube.

The adjustment of the seat with respect to the vertical reference plane passing through the axis of the bottom bracket assembly of the bicycle, on the other hand, is obtained by sliding the rectilinear portion of the rods of the frame of the seat with respect to the jaw; in particular, the stable positioning of the seat at the desired distance from the vertical reference plane passing through the axis of the bottom bracket assembly of the bicycle is obtained by locking the aforementioned jaw elements on the rods.

Finally, the adjustment of the inclination of the seat with respect to the seat post is obtained by allowing the jaw to rotate with respect to the seat tube, in particular about a horizontal axis perpendicular to a plane of longitudinal symmetry of the bicycle frame. For this purpose, the seat tube comprises a cylindrical seat in which a portion of the jaw (also cylindrical) is housed. The jaw is finally locked in the desired position through two grasping screws.

A seat post that allows all three of the adjustments discussed above is described in patent application PCT/IT/000736 to the same Applicant.

The Applicant observes that, in order to allow the aforementioned adjustments, such a seat post comprises many components that are mobile with respect to one another. Due to the tolerance limits of the coupling surfaces of such components it may occur that, even after the components are locked in the desired position, there is still the possibility that small relative movements occurring between the various components of the seat post occur. Such movements can be felt by the cyclist and can therefore worsen the cyclist's comfort. The aforementioned movements are also dangerous since, if repeated over time, they can cause the seat post to break through fatigue, without any prior warning for the cyclist.

The technical problem at the basis of the present invention is to provide a seat post that allows a wide adjustment of the seat, whilst nevertheless being more reliable and comfortable than the known seat posts.

The present invention therefore relates to a bicycle seat post, comprising:
- a tubular element adapted to support a seat of a bicycle, and
- grasping means of a portion of frame of said seat adapted to be rotatably coupled with said tubular element to allow said grasping means to be positioned in a plurality of operating positions defined about an axis X-X perpendicular to a plane of longitudinal symmetry of the frame of said bicycle,
characterised in that said tubular element comprises first holding means of said grasping means and in that said grasping means comprise second holding means operatively coupled with said first holding means to prevent a movement of said grasping means along said axis X-X.

Advantageously, in the seat post of the present invention any possibility of relative movement between grasping means and tubular element in a direction perpendicular to the plane of longitudinal symmetry of the bicycle frame is eliminated. In particular, such a movement is properly blocked by the contrasting action applied by the mechanical coupling between the first holding means of the grasping means provided on the tubular element and the second holding means provided in the grasping means. The grasping means can therefore rotate about the axis X-X to allow the adjustment of the inclination of the seat with respect to the tubular element, but they cannot move perpendicular to the plane of longitudinal symmetry of the bicycle frame, as can however occur in adjustable seat posts of the prior art, where the coupling between tubular element and the grasping means (in particular, the jaw) takes place through respective cylindrical surfaces. Any possible relative movement between grasping means and tubular element, which would not only have no practical function, but would be rather undesired since, as well as harming the comfort of the cyclist, could, if repeated over time, cause the seat post to break by fatigue, is thus eliminated. The seat post of the present invention is therefore advantageously more reliable, stronger and more comfortable than those of the prior art.

Preferably, the tubular element comprises a seat for coupling with the aforementioned grasping means. The first holding means are in this case defined in such a coupling seat.

In turn, the grasping means preferably comprise a coupling member with said coupling seat. The second grasping means are in this case defined in such a coupling member.

In a seat post having the aforementioned preferred features, the mechanical coupling between tubular element and grasping means is thus made by coupling together the surface of the coupling seat provided in the tubular element and the surface of the coupling member provided in the grasping means.

Even more preferably, the aforementioned coupling seat comprises a surface of revolution about the axis X-X and the first holding means are defined by at least one portion of said surface of revolution. The coupling member, on the other hand, preferably comprises an abutment surface adapted to cooperate in abutment against the surface of revolution and having a shape matching that of the surface of revolution. In this case, the second holding means are defined by at least one portion of said abutment surface. Advantageously, the coupling between matching surfaces ensures a stable, long-lasting and repeatable mechanical coupling, in addition to the fact that it is easy to carry out at the assembly stage of the seat post.

In a preferred embodiment of the seat post of the present invention, the surface of revolution of the coupling seat of the tubular element is defined by the rotation about the axis X-X of a generatrix line having at least one inclined part with respect to such an axis X-X. In this case, the portion of surface of revolution that defines the aforementioned first holding means is defined by the rotation about the axis X-X of said at least one inclined part. The matching abutment surface of the coupling member provided in the grasping means is also in this case defined by the rotation about a rotation axis parallel to the axis X-X of a generatrix line having at least one inclined part, the portion of abutment surface that defines the aforementioned second rotation means being defined by the rotation of this latter inclined part about the respective rotation axis.

The inclined part of the aforementioned generatrices can for example be a rectilinear part. In this case the portion of surface of revolution that defines the aforementioned first holding means and the portion of the abutment surface matching it and that defines the aforementioned second holding means preferably comprise respective conical surfaces that extend along the axis X-X.

The inclined part can alternatively be a curvilinear part. In this case the portion of surface of revolution that defines the aforementioned first holding means and the portion of abutment surface matching it and that defines the aforementioned second holding means preferably comprise respective curved surfaces that extend along the axis X-X.

Advantageously, the coupling between conical or curved surfaces extending along the axis X-X ensures the automatic centring of the grasping means in the coupling seat with respect to said axis X-X, as well as a high degree of obstruction to the translation of the grasping means along such an axis.

In a particularly preferred embodiment of the seat post of the present invention, the aforementioned generatrix line comprises two inclined parts having opposite inclination with respect to the plane of longitudinal symmetry of the bicycle frame. Advantageously, with such an operative configuration the relative translation of the grasping means with respect to the tubular element is prevented in both directions of the axis X-X.

Preferably, the portion of surface of revolution that defines the aforementioned first holding means defines, on a plane passing through the axis X-X, a line having a substantially convex progression with respect to said axis X-X. Advantageously, in this case a seat post can be made in which the portion of coupling surface of the grasping means is thicker and therefore stronger.

However, a variant is foreseen in which the portion of surface of revolution that defines the aforementioned first holding means defines, on a plane passing through said axis X-X, a line having a substantially concave progression with respect to said axis X-X.

The aforementioned generatrix line can be entirely inclined with respect to the axis X-X or can comprise at least one part substantially parallel to the axis X-X. In the first case, the surface of revolution of the coupling seat provided in the tubular element and its matching abutment surface of the coupling member provided in the grasping means are entirely defined by conical or curved surfaces.

In the second case, on the other hand, the surface of revolution of the coupling seat provided in the tubular element and its matching abutment surface of the coupling member provided in the grasping means each comprise a portion of cylindrical surface and a portion of conical or curved surface, the portion of conical or curved surface defining the aforementioned holding means.

Preferably, the part substantially parallel to the axis X-X is arranged at at least one free end of said generatrix line, and more preferably at the opposite free ends of the generatrix line. The portion of conical or curved surface is thus defined in the coupling seat of the tubular element and in the coupling member of the grasping means in a substantially central position along the axis X-X, that is near to the plane of longitudinal symmetry of the bicycle frame.

The aforementioned generatrix line can also comprise a gradual joining part between the part substantially parallel to the axis X-X and the inclined part, in order not to create areas with high tension concentration on the coupling surfaces of the tubular element and of the holding means.

In an alternative embodiment of the seat post of the present invention, the surface of revolution of the coupling seat provided in the tubular element comprises at least one first portion of cylindrical surface extending along the axis X-X and a second portion of cylindrical surface extending along the axis X-X and having a diameter different to that of said at least one first portion of cylindrical surface. In such an embodiment, the aforementioned first holding means are defined by the second portion of cylindrical surface. Such a second portion of cylindrical surface defines, in the coupling seat defined in the tubular element, a throat (in the case in which the diameter of such a portion is larger than the diameter of the first portion of cylindrical surface) or a projection or step (in the case in which the diameter of such a portion is smaller than the diameter of the first-portion of cylindrical surface) that cooperates with respectively a projection or a throat defined in the coupling member of the grasping means to offer the maximum degree of obstacle to the translation of the grasping means along the axis X-X.

Preferably, the at least one first portion of cylindrical surface is arranged at a free end of the surface of revolution and the second portion of cylindrical surface is arranged at the plane of longitudinal symmetry of the frame of said bicycle. More preferably, the second portion of cylindrical surface is arranged centrally with respect to two opposite end first portions of cylindrical surface.

A gradual joining surface can also be provided between the aforementioned at least one first portion of cylindrical surface and the aforementioned second portion of cylindrical surface, again in order to not create areas with high tension concentration on the coupling surfaces of the tubular element and of the grasping means.

Preferably, the surface of revolution and the aforementioned abutment surface are symmetrical with respect to the plane of longitudinal symmetry of the bicycle frame.

In the preferred embodiment of the seat post of the present invention, the tubular element comprises, at a free end thereof, a first flange comprising said coupling seat and, on opposite sides to said coupling seat, a pair of fins extending canti-levered from said coupling seat.

Preferably, the grasping means comprise a jaw comprising an upper jaw element and a lower jaw element, and the aforementioned coupling member is defined by said lower jaw element.

Preferably the grasping means comprise a second flange adapted to be coupled with said first flange through locking means, the jaw being arranged between said first flange and said second flange.

In the preferred embodiment of the seat post of the present invention, the second flange is made in a single piece with said upper jaw element, so as to reduce the number of components of the seat post and thus to make it easier to assemble, at the same time reducing the possibility of having undesired relative movements between the various components of the seat post. The second flange can however be made in a distinct piece from said upper jaw element. In this last case, the upper jaw element and the lower jaw element preferably mirror one another, so as to be interchangeable.

The tubular element is preferably made from a light metallic alloy or from composite material.

The grasping means are preferably made from the same material from which said tubular element is made.

In the most preferred embodiment of the seat post of the present invention, the tubular element and the grasping means are all made from composite materials.

Further characteristics and advantages of the present invention shall become clearer from the following detailed description of some preferred embodiments thereof, given as a non-limiting example with reference to the attached drawings. In such drawings:
- figure 1 is a schematic side view of a bicycle that comprises a seat post in accordance with the present invention;
- figure 2 is a schematic perspective and exploded view of a first embodiment of the seat post of the present invention coupled with a seat;
- figures 3 to 10 are plan views of variants of the tubular element of a seat post according to the present invention;
- figures 11 and 12 are plan views of variants of a jaw element adapted to respectively couple with the tubular element of figure 3 and 4;
- figure 13 is a schematic perspective and exploded view of an alternative embodiment of the seat post of the present invention;
- figure 14 is a perspective view of an alternative embodiment of the seat post of the present invention.

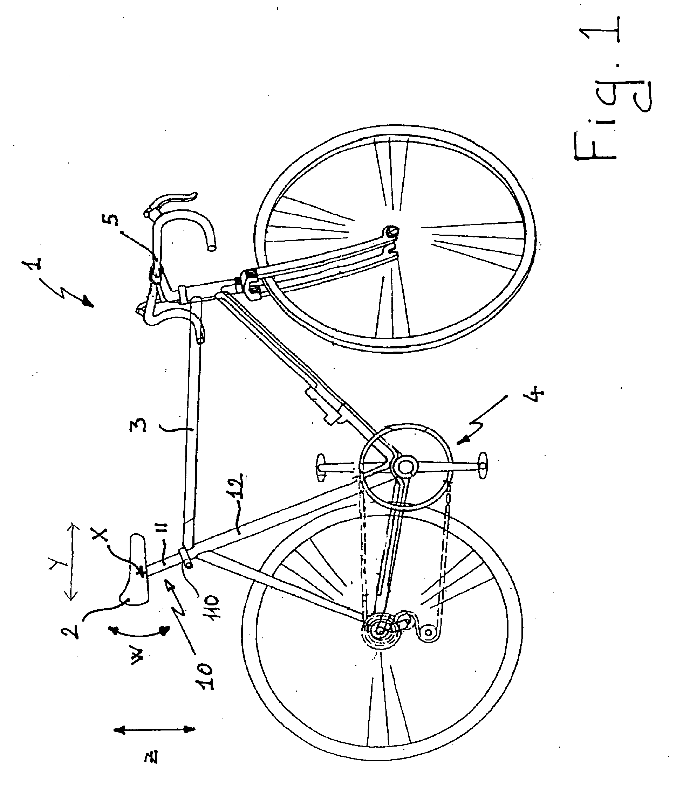

In figure 1, reference numeral 1 indicates a bicycle, in particular a racing bicycle. Such a bicycle 1 comprises a seat 2 associated with a frame 3 of the bicycle 1 through a seat post 10 in accordance with the present invention. The bicycle 1 also comprises a bottom bracket assembly 4 and handlebars 5, both of the conventional type.

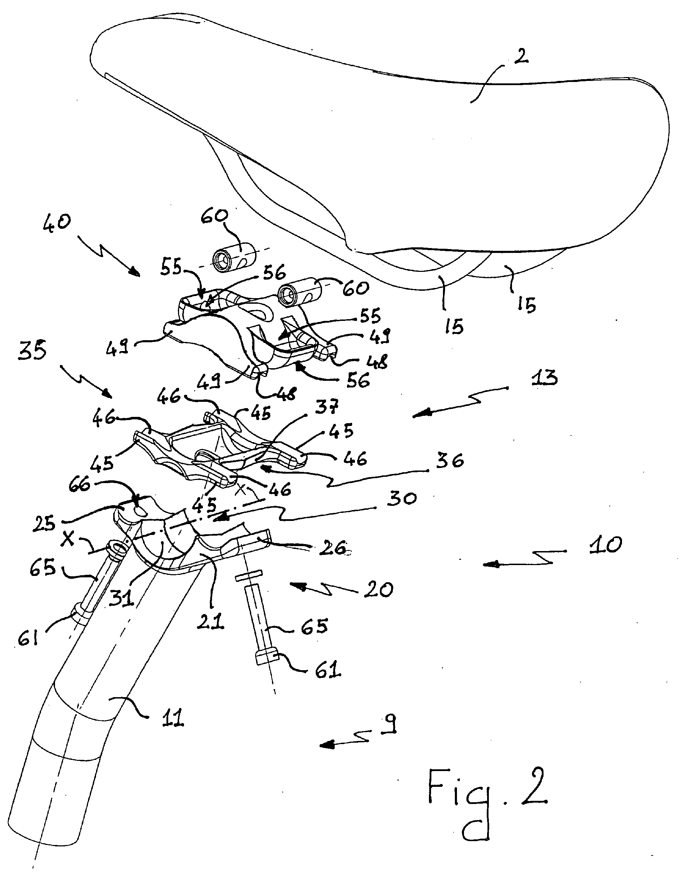

As better shown for example in figure 2, the seat post 10 comprises a seat tube 9 having a portion of tubular element 11 adapted to be telescopically inserted, for at least part of the longitudinal extension thereof, in a suitable tubular seat 12 provided in the frame 3 of the bicycle 1 (figure 1) and a jaw 13 coupled with the tubular element 11 and adapted to grasp the seat 2 to associate it with the tubular element 11. In particular, the jaw 13 grasps the rods 15 of the frame of the seat 2.

The seat post 10 is an adjustable seat post. It therefore allows the position of the seat 2 to be adjusted in height (in the two ways of direction z in figure 1), in rotation about a horizontal axis X-X perpendicular to the plane of longitudinal symmetry of the frame 3 (as indicated by the arrow W in figure 1) and in a horizontal direction (as indicated by the arrow y in figure 1).

The adjustment of the position of the seat 2 takes place as described in patent application PCT/IT/000736 to the same Applicant, incorporated here by reference.

With reference to figure 2, the seat tube 9 comprises, at a free end 20 of the tubular element 11, a fixed flange 21 for coupling with the jaw 13. The flange 21 is preferably made in a monolithic piece with the tubular element 11 or, according to a variant, it is coupled with the tubular element 11 through a dap joint coupling, by gluing, through fastening elements or any other system capable of generating a stable coupling.

The fixed flange 21 has a front fin 25 and a rear fin 26 (with reference to the position of the seat post 10 on the bicycle), placed on opposite sides of the tubular element 11. The fixed flange 21 comprises, between the two fins 25 and 26, a coupling seat 30 with the jaw 13 defined, at least in part, by a surface of revolution 31 obtained, ideally, by rotation of a generatrix line 90 about the axis X-X.

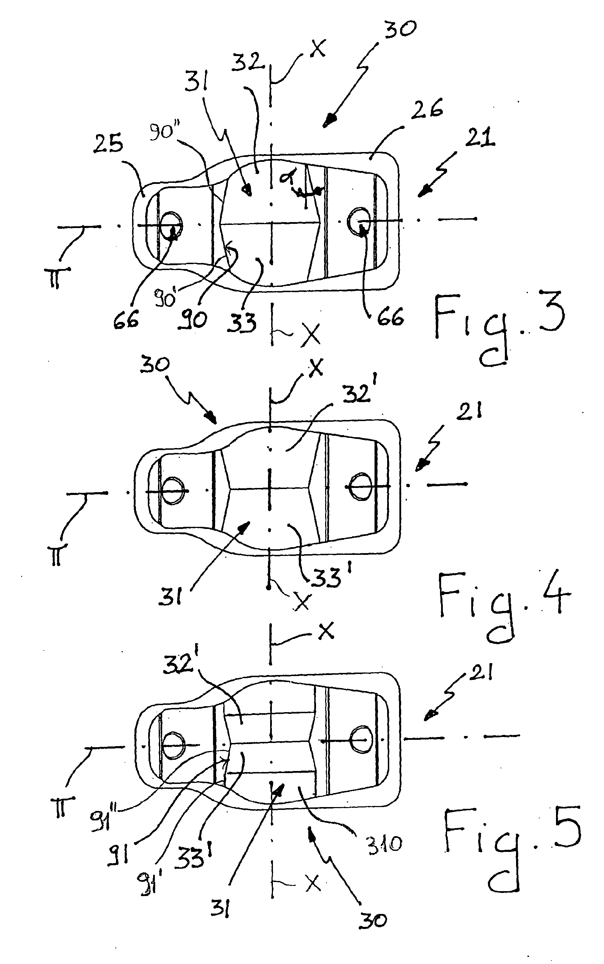

In the illustrated example in figure 2, of which figure 3 illustrates the plan of the flange 21 in greater detail, the surface of revolution 31 consists of the surface of two coaxial and opposite frustums of cone 32 and 33, in such a way that their bases coincide at the middle plane π of the fixed flange 21, such a middle plane coinciding with the plane of longitudinal symmetry of the frame 3 of the bicycle. The generatrix line 90 is formed in this case from two rectilinear parts 90' and 90" inclined with respect to the axis X-X and having opposite inclination with respect to the middle plane π of the flange 21.

In practice, the coupling seat 30 is convex with respect to the axis X-X, that is with a progression that goes away from it, where the greatest deviation is at the middle plane π. In other words, the surface of the coupling seat 30 defines, on a plane passing through the axis X-X, a line having a substantially convex progression with respect to said axis X-X.

The conical surfaces 32 and 33 (and therefore the inclined parts 90' and 90" of the generatrix line 90) are preferably inclined with respect to the axis X-X by an angle α of between 0.5° and 20°, preferably between 1° and 10°.

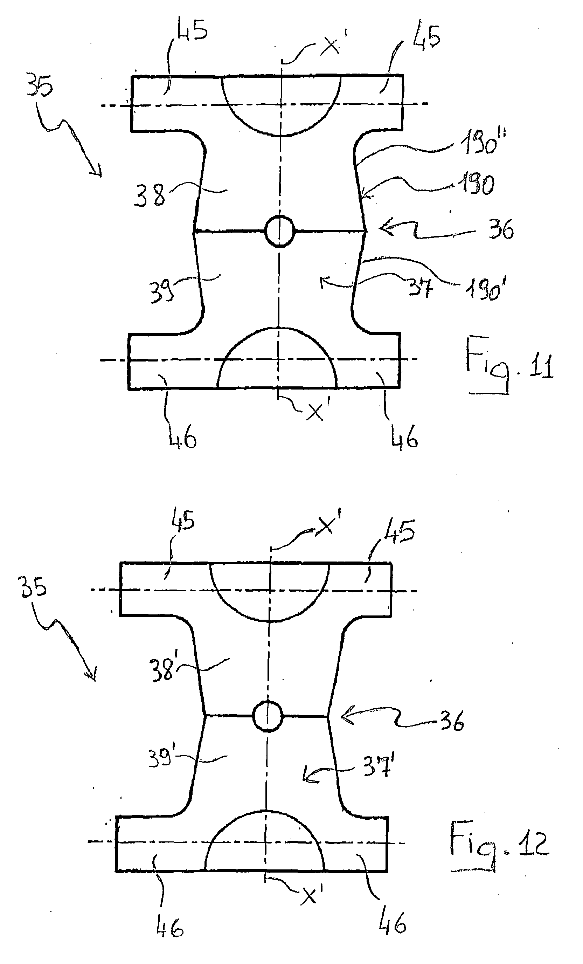

Again with reference to figure 2, the jaw 13 comprises a lower jaw element 35 and an upper jaw element 40. As better illustrated in figure 11, in which the lower jaw element 35 of figure 2 is represented in greater detail, the lower jaw element 35 has a coupling portion 36 adapted to operate in abutment against the coupling seat 30 of the flange 21. The coupling portion 36 is defined by an abutment surface 37 having a shape matching the surface of revolution 31. The abutment surface thus consists of the surface of two coaxial and opposite frustums of cone 38 and 39, such frustums of cone being defined by the rotation about a rotation axis X'-X' parallel to the axis X-X of a generatrix line 190 having, as the generatrix line 90, two inclined parts 190', 190" with respect to the aforementioned rotation axis.

The lower jaw element 35 also comprises arms 45 projecting laterally from the coupling portion 36 and on which tracks 46 for the insertion of the rods 15 of the seat 2 are formed (figure 2).

The upper jaw element 40, in the example illustrated in figure 2, is a monolithic element comprising in a single piece the tracks 48 for the insertion of the rods 15 of the seat, preferably formed in arms 49 which are specular to the arms 45, and holding means with respect to the fixed flange 21.

In particular, the holding means comprise two recesses 55, on the bottom of each of which a hole 56 is formed. In the recesses 55 cylinder nuts 60 are housed in which the stems of two screws 65 are screwed,' respectively passing through the holes 56 and the holes 66 formed in the fins 25 and 26 of the fixed flange 21. The heads 61 of the screws are held by the fins 25 and 26, for which reason the more the stems are screwed into the cylinder nuts 60 the more the upper jaw element 40 is locked against the fixed flange 21. Since the lower jaw element 35 is arranged between the flange 21 and the upper jaw element 40, the locking also traps the rods 15 of the seat 2 in the jaw 30.

Since the screws 65 can be screwed into the cylinder nuts 60 by different amounts, and since the lower jaw element 35 can rotate in the coupling seat 30 of the flange 21, the seat can be locked in multiple angular positions about the axis X-X.

Moving on to the variants of figures 4 to 10, elements corresponding to those of the previous figures are indicated with the same reference numerals.

Figure 4 illustrates a variant of the flange 21 wherein the surface of revolution 31 of the coupling seat 30 again consists of a pair of frustums of cone 32' and 33', but orientated the opposite way with respect to what has been illustrated in figure 3, so as to form a coupling seat that widens going from the middle plane π towards the outside of the seat post along the axis X-X. In other words, in this case the surface of the coupling seat 30 defines, on a plane passing through the axis X-X, a line having a substantially concave progression with respect to the axis X-X.

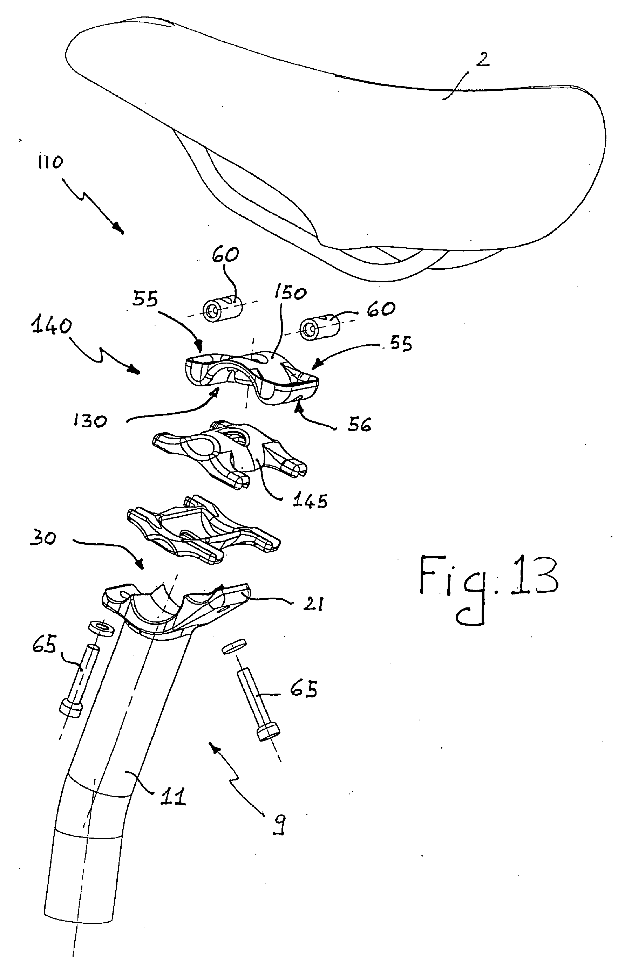

Figure 12 shows in detail the lower jaw element 35 adapted to be coupled with the flange 21 of figure 4. It should be noted how the abutment surface 37' of the coupling portion 36 has a shape matching that of the surface of revolution 31 of the flange 21 of figure 4. In other words, the abutment surface 37' consists of a pair of frustums of cone 38' and 39' orientated the opposite way with respect to what is illustrated in figure 11.

Figure 5 illustrates a second variant of the flange 21 wherein the surface of revolution 31 of the coupling seat 30 is ideally defined by a broken generatrix line 91 that differs from the generatrix line 90 of figure 3 since it is only partly inclined with respect to the axis X-X. In this case the surface 31 of the coupling seat 30 (and similarly the abutment surface of the lower jaw element 35) comprises a portion of cylindrical surface 310 generated by the rotation about the axis X-X of a part 91' of the generatrix line 91 that is rectilinear and parallel to the axis X-X.

The part 91' is arranged in an axially outer position with respect to an inclined part 91" on opposite sides with respect to the middle plane π, so that the portions of conical surfaces 32', 33' are located in a substantially central position along the axis X-X, i.e. near to the middle plane π

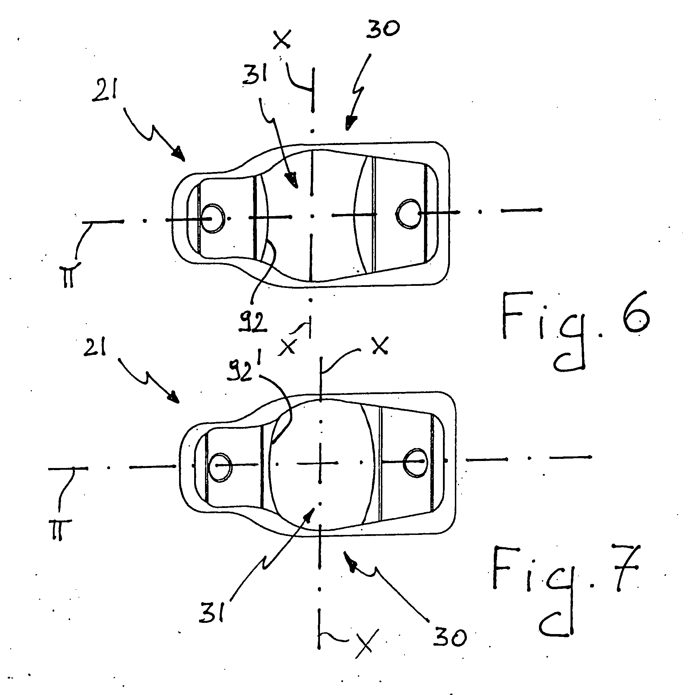

Figure 6 illustrates a third variant of the flange 21 wherein the surface of revolution 31 of the coupling seat 30 is ideally defined by a curved generatrix line 92, for example a circle, ellipse or parabola portion, symmetrical with respect to the middle plane π and such as to define a concave coupling seat 30 for rotation about the axis X-X.

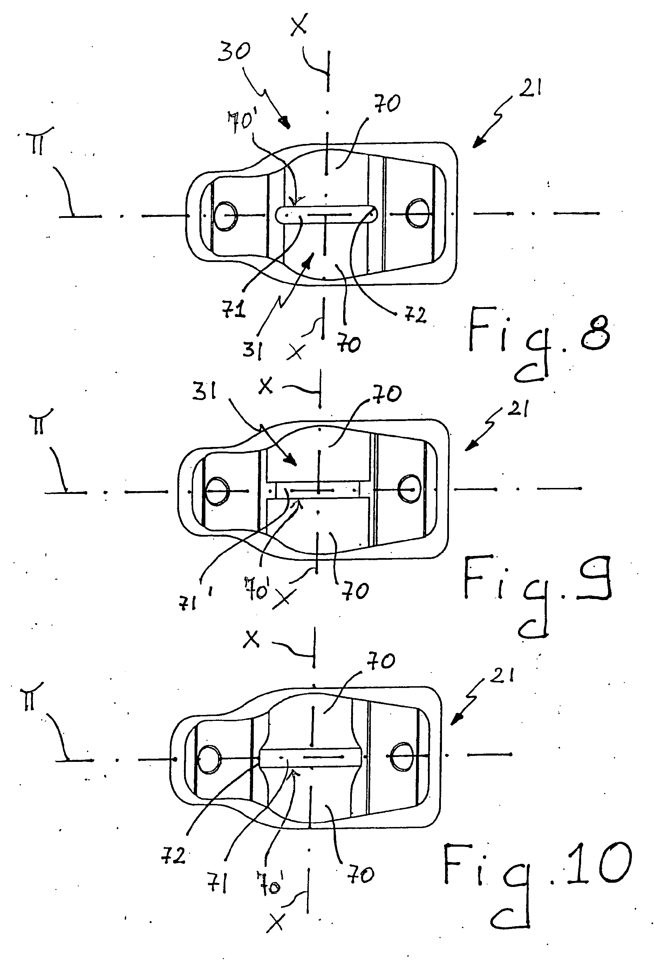

Figure 7 illustrates a fourth variant of the flange 21 that differs from the one illustrated in figure 6 only in that the curved generatrix line 92' defines a convex coupling seat 30 for rotation about the axis X-X.

Figure 8 illustrates a fifth variant of the flange 21 wherein the coupling seat 30 is defined by a portion of cylindrical surface 70 that extends according to the axis X-X, interrupted at the middle plane π by a throat 71 defined by a portion of cylindrical surface 70' having a diameter larger than that of the portion of cylindrical surface 70. The throat 71 has the bottom 72 rounded and extends for the entire circumferential extension of the portion of cylindrical surface 70. In other words, the generatrix line that ideally defines the surface of revolution 31 of the seat 30 for rotation about the axis X-X is in part rectilinear and parallel to the axis X-X (in the part corresponding to the cylindrical portion 70) and in part curved (in the part corresponding to the bottom 72 of the throat 71). The throat 71 is adapted to cooperate with a projection suitably created in the coupling surface of the lower jaw element 35.

Figure 9 illustrates a sixth variant of the flange 21 that differs from the one illustrated in figure 8 in that the cylindrical portion 70 of the coupling surface 31 is interrupted at the middle plane π by a projection 71' instead of by a throat. In particular, the projection 71' has a square section, so that the generatrix line of the surface of revolution 31 comprises steps, but alternatively it could also be rounded and/or joined to the cylindrical portion 70. The projection 71' is adapted to cooperate with a throat suitably created in the coupling surface of the lower jaw element 35.

Figure 10 illustrates a seventh variant of the flange 21 that differs from the one illustrated in figure 8 in that the throat 71 has a flat bottom 72 that joins to the cylindrical portion 70 gradually.

The throats 71 and the projection 71' of the variants illustrated in figures 8, 9 and 10 could, alternatively, be made in association with surfaces of revolution different to cylindrical surfaces, like for example the surfaces of revolution 31 illustrated in figures 3, 4, 5, 6, and 7 thus obtaining other variants of the seat post of the present invention.

The geometries illustrated up to here for the throats can of course be used to form projections and vice-versa, just as other geometries are also possible.

Further alternatives consist of forming more than one throat or more than one projection, and/or of forming the throats and the projections 71 and 71' in a position not coinciding with the middle plane π, like for example on the outer edges of the cylindrical portion 70.

The variants described above share the feature that the coupling surfaces between flange 21 and lower jaw element 35 are symmetrical with respect to the middle plane π. Actually, the coupling surfaces can also have a different configuration, but still such as to form stop means of the lower jaw element 35 that prevent its lateral movement with respect to the flange 21.

Figure 13 illustrates an alternative embodiment of a seat post according to the present invention, in particular the seat post 110 of figure 13 differs from the seat post 10 illustrated in figure 2 mainly for the shape of the upper jaw element 140, which instead of being monolithic is divided into two components. A first component 145 is identical to the lower jaw element 35, and is interchangeable with it. A second component 150 comprises the recesses 55 for housing the cylinder nuts 60 and the holes 56 for the passage of the screws 65. The second component 150 is in practice a mobile flange that encloses the first element as described in patent application PCT/IT/000736 to the same Applicant. It should be noted that a coupling seat 130 identical to the coupling seat 30 of the flange 21 is formed on the mobile flange 150. In addition, it is possible to provide means for coupling in rotation with the first component 145 in the coupling seat 130 again as described in patent application PCT/IT/000736 to the same Applicant.

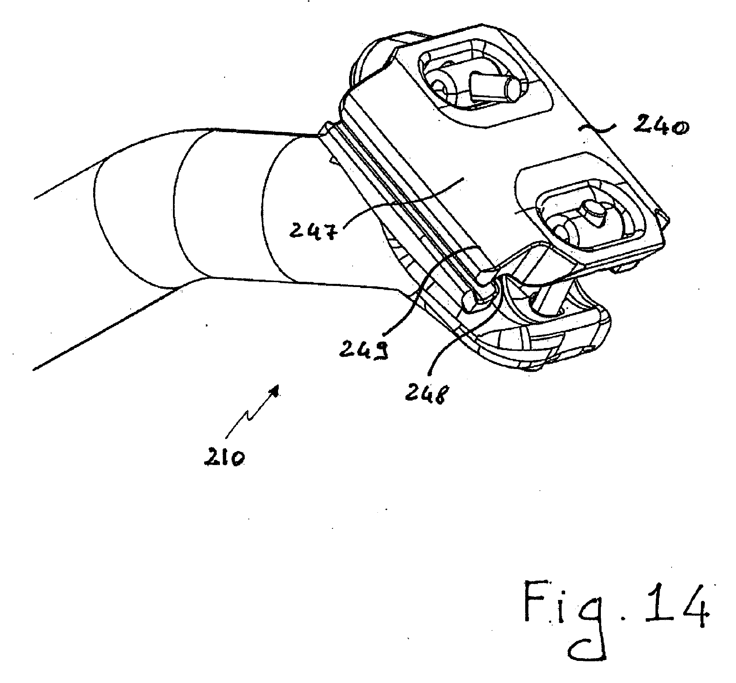

Figure 14 illustrates a further alternative embodiment of a seat post according to the present invention. In particular, the seat post 210 of figure 14 differs from the seat post 10 of figure 2 just for the shape of the upper jaw element 240, that is substantially squared. More in particular, there are no more arms, but the tracks 248 are formed on a peripheral portion 249 solidly connected to the main body 247 of the upper jaw element 240 along the entire length of the tracks. All the other elements are as in the embodiment of figure 2 and have the same reference numbers. This shape allows to make a particularly strong upper jaw element and therefore it is preferred when the upper jaw element is made of composite material.

Preferably, the seat posts according to the present invention are at least partially, and even more preferably totally, made from composite material, comprising structural fibres incorporated in a polymeric material. Typically, the structural fibres are selected from the group consisting of carbon fibres, glass fibres, aramidic fibres, ceramic fibres, boron fibres and combinations thereof, carbon fibres being preferred. Preferably, the polymeric material is thermosetting. However, the possibility of using a thermoplastic material is not excluded. More preferably, the polymeric material comprises an epoxy resin.

The arrangement of said structural fibres in the polymeric material can be a random arrangement of pieces or sheets of structural fibres, a substantially unidirectional ordered arrangement of fibres, a substantially bidirectional ordered arrangement of fibres, an arrangement with woven fibres or a combination of the above.

Alternatively, all of the components of the seat post, or just a part thereof, can be made from metallic material like light alloys, preferably aluminium alloys.

It should be observed that the coupling seat 30 and the front and rear fins 25 and 26 have been described up to now as forming part of a flange 21. Actually the presence of the flange should not be considered as an essential feature of the invention, with the coupling seat 30 being adapted to be formed for example directly on the end 20 of the tubular element 11, and the front or rear fins 25 and 26 being adapted to project directly from the edge of the tubular element or be replaced by a through pin as described in patent US 5,190,346.

## Claims

1. Bicycle seat post (10), comprising:
- a tubular element (11) adapted to support a seat (2) of a bicycle (1), and
- grasping means (13) of a portion of frame (15) of said seat (2) adapted to be rotatably coupled with said tubular element (11) to allow said grasping means (13) to be positioned in a plurality of operating positions defined about an axis X-X perpendicular to a plane of longitudinal symmetry of the frame (3) of said bicycle (1),
**characterised in that** said tubular element (11) comprises first holding means (32,33,32',33',71,71') of said grasping means (13) and **in that** said grasping means (13) comprise second holding means (38, 39, 38', 39') operatively coupled with said first holding means (32,33,32',33',71,71') to prevent a movement of said grasping means (13) along said axis X-X.

2. Seat post (10) according to claim 1, wherein said tubular element (11) comprises a seat (30) for coupling with said grasping means (13), said first holding means (32,33,32',33',71,71') being defined in said coupling seat (30), and wherein said grasping means (13) comprise a coupling member (35) with said coupling seat (30), said second holding means (38,39,38',39') being defined in said coupling member (35).

3. Seat post (10) according to claim 2, wherein said coupling seat (30) comprises a surface of revolution (31) about said axis X-X and wherein said first holding means (32,33,32',33',71,71') are defined by at least one portion of said surface of revolution (31).

4. Seat post (10) according to claim 3, wherein said coupling member (35) comprises an abutment surface (37,37') having a shape matching that of said surface of revolution (31) and wherein said second holding means (38,39,38',39') are defined by at least one portion of said abutment surface (37,37').

5. Seat post (10) according to claim 3 or 4, wherein said surface of revolution (31) is defined by the rotation about said axis X-X of a generatrix line (90,91,92,92') having at least one inclined part with respect to said axis X-X and wherein said at least one portion of said surface of revolution (31) is defined by the rotation about said axis X-X of said at least one inclined part.

6. Seat post (10) according to claim 5, wherein said generatrix line has two inclined parts (90',90") with respect to said axis X-X, said inclined parts (90',90") having opposite inclination with respect to said plane of longitudinal symmetry of the frame (3) of the bicycle (1).

7. Seat post (10) according to claim 5 or 6, wherein said at least one inclined part is a rectilinear part (90', 90", 91") .

8. Seat post (10) according to any one of claims 4 to 7, wherein said at least one portion of surface of revolution (31) and said at least one portion of abutment surface (37,37') comprise respective conical surfaces (32,33,32',33') that extend along said axis X-X.

9. Seat post (10) according to claim 5 or 6, wherein said at least one inclined part is a curvilinear part (92,92').

10. Seat post (10) according to claim 9, wherein said at least one portion of surface of revolution (31) and said at least one portion of abutment surface (37,37') comprise respective curved surfaces that extend along said axis X-X.

11. Seat post (10) according to any one of claims 3 to 10, wherein said at least one portion of surface of revolution (31) defines, on a plane passing through said axis X-X, a line having a substantially convex progression with respect to said axis X-X.

12. Seat post (10) according to any one of claims 3 to 10, wherein said at least one portion of surface of revolution (31) defines, on a plane passing through said axis X-X, a line having a substantially concave progression with respect to said axis X-X.

13. Seat post (10) according to any one of claims 5 to 12, wherein said generatrix line is entirely inclined with respect to said axis X-X.

14. Seat post (10) according to any one of claims 5 to 12, wherein said generatrix line comprises at least one part (91') substantially parallel to said axis X-X.

15. Seat post (10) according to claim 14, wherein said at least one part (91') substantially parallel to said axis X-X is arranged at at least one free end of said generatrix line.

16. Seat post (10) according to claim 14 or 15, wherein said generatrix line comprises a gradual joining part between said at least one part (91') substantially parallel to said axis X-X and said at least one inclined part (91").

17. Seat post (10) according to claim 3 or 4, wherein said surface of revolution (31) comprises at least one first portion of cylindrical surface (70) extending along said axis X-X and a second portion of cylindrical surface (70') extending along said axis X-X and having a diameter different to that of said at least one first portion of cylindrical surface (70), wherein said first holding means are defined by said second portion of cylindrical surface (70').

18. Seat post (10) according to claim 17, wherein said at least one first portion of cylindrical surface (70) is arranged at a free end of said surface of revolution (31) and said second portion of cylindrical surface (70') is arranged at said plane of longitudinal symmetry of the frame (3) of said bicycle (1).

19. Seat post (10) according to claim 17 or 18, wherein said second portion of cylindrical surface (70') has a diameter larger than that of said at least one first portion of cylindrical surface (70).

20. Seat post (10) according to claim 17 or 18, wherein said second portion of cylindrical surface (70') has a diameter smaller than that of said at least one first portion of cylindrical surface (70).

21. Seat post (10) according to any one of claims 17 to 20, wherein said surface of revolution (31) comprises a gradual joining surface between said at least one first portion of cylindrical surface (70) and said second portion of cylindrical surface (70').

22. Seat post (10) according to any one of claims 4 to 21, wherein said surface of revolution (31) and said abutment surface (37,37') are symmetrical with respect to said plane of longitudinal symmetry of the frame (3) of the bicycle (1).

23. Seat post (10) according to any one of claims 2 to 22, wherein said tubular element (11) comprises, at a free end (20) thereof, a first flange (21) comprising said coupling seat (30) and, on opposite sides to said coupling seat (30), a pair of fins (25,26) extending canti-levered from said coupling seat (30).

24. Seat post (10) according to any one of claims 4 to 23, wherein said grasping means (13) comprise a jaw comprising an upper jaw element (40,140) and a lower jaw element (35), wherein said coupling member is defined by said lower jaw element (35).

25. Seat post (10) according to claim 24 when depending on claim 23, wherein said grasping means (13) comprise a second flange (150) adapted to be coupled with said first flange (21) through locking means (60,65), wherein said jaw (13) is arranged between said first flange (21) and said second flange (150).

26. Seat post (10) according to claim 25, wherein said second flange (150) is made in a single piece with said upper jaw element (40).

27. Seat post (10) according to claim 25, wherein said second flange (150) is made in a distinct piece from said upper jaw element (140).

28. Seat post (10) according to claim 27, wherein said upper jaw element (140) and said lower jaw element (35) are mirror-like elements.

29. Seat post (10) according to any one of the previous claims, wherein said tubular element (11) is made from a light metallic alloy.

30. Seat post (10) according to any one of claims 1 to 28, wherein said tubular element (11) is made from composite material.

31. Seat post (10) according to any one of the previous claims, wherein said grasping means (13) are made from the same material from which said tubular element (11) is made.

32. Seat post (10) according to claim 1, wherein said grasping means (13) comprises an upper jaw element (240) and a lower jaw element (35), both having tracks (248) thereon to fit on the portion of the seat to be clamped, the tracks of the upper jaw element (240) being formed on a peripheral portion (249) solidly connected to a main body (247) of the upper jaw element (240) along the entire length of the tracks (248).
